# EUROPEAN PATENT APPLICATION

(11) **EP 2 447 957 A2**
(43) Date of publication of application: **02.05.2012**
(21) Application number: 11186265.2
(22) Date of filing: 21.10.2011
(51) Int. Cl.: H01B 12/06, H02J 3/36

(54) **Superconducting cable system**

(30) Priority: 28.10.2010 US 914139
(71) Applicant: General Electric Company, Schenectady, NY 12345 (US)
(72) Inventor: Sutherland, Peter Edward, Schenectady, New York 12306 (US)
(74) Representative: Illingworth-Law, William Illingworth

(57) **Abstract**

In an embodiment, an apparatus including a cable (110,210,310,410) is disclosed. The cable (110) includes at least two conductors (121,122), each conductor (121,122) comprising a high-temperature superconductor material, wherein a first conductor (121) is concentric within a second conductor (122), and wherein the first conductor (121) is tapered at a first end (130) of the cable (110) and the second conductor (122) is tapered at a second end (135) of the cable (110).

## Description

### BACKGROUND OF THE INVENTION

The present invention relates generally to a superconducting cable system, and more particularly to a superconducting cable system including tapered conductors.

Current superconducting cables for power transmission within an electrical grid have high capacitance, which makes long distance power transmission difficult due to charging currents. Also, superconducting material is expensive. To be able to carry significant current, while concurrently being able to withstand fault currents, requires the cable to contain excessive amounts of superconducting material.

### BRIEF DESCRIPTION OF THE INVENTION

A first aspect of the invention provides an apparatus comprising: a cable, the cable comprising at least two conductors, wherein a first conductor is concentric within a second conductor, and wherein the first conductor is tapered at a first end of the cable and the second conductor is tapered at a second end of the cable.

A second aspect of the invention provides a system comprising: a cable, the cable comprising at least two conductors, wherein a first conductor is concentric within a second conductor, and wherein the first conductor is tapered at a first end of the cable and the second conductor is tapered at a second end of the cable; at least two tuning inductors, wherein a first tuning inductor is connected to the first conductor at a second end of the cable and a second tuning inductor is connected to the second conductor at a first end of the cable; and at least two adjustable frequency converters, a first adjustable frequency converter connected to the first tuning inductor and the second adjustable frequency converter connected to the second tuning inductor.

A third aspect of the invention provides an apparatus comprising: a cable, the cable comprising at least two conductors, each conductor comprising a high-temperature superconductor material, wherein a first conductor is concentric within a second conductor, the second conductor is concentric within a third conductor, and the third conductor is concentric within a fourth conductor, and wherein the first conductor and the third conductor are tapered at a first end of the cable and the second conductor and the fourth conductor are tapered at a second end of the cable

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:

FIG. 1 shows a schematic illustration of a superconducting cable system according to an embodiment of the invention.

FIG. 2 shows a partial perspective view of a conductor for a superconducting cable system according to an embodiment of the invention.

FIG. 3 shows a schematic illustration of a superconducting cable system according to an embodiment of the invention.

FIG. 4 shows a schematic illustration of a superconducting cable system according to an embodiment of the invention.

FIG. 5 shows a schematic illustration of a superconducting cable system according to an embodiment of the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

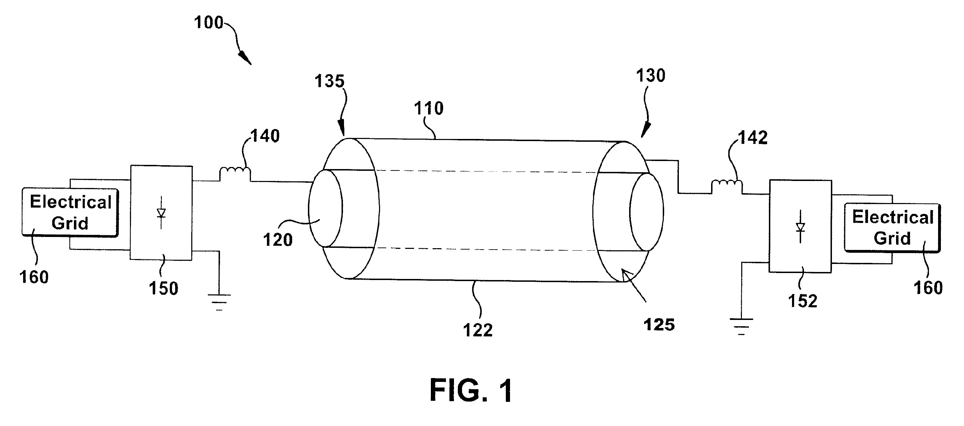

Turning to FIG. 1, a schematic illustration of a superconducting cable system 100 according to an embodiment of the invention is shown. System 100 is shown including a superconducting cable 110. As used herein, "superconducting" refers to exhibiting superconductivity, which is a property of a material whereby the material has no resistance to the flow of an electric current.

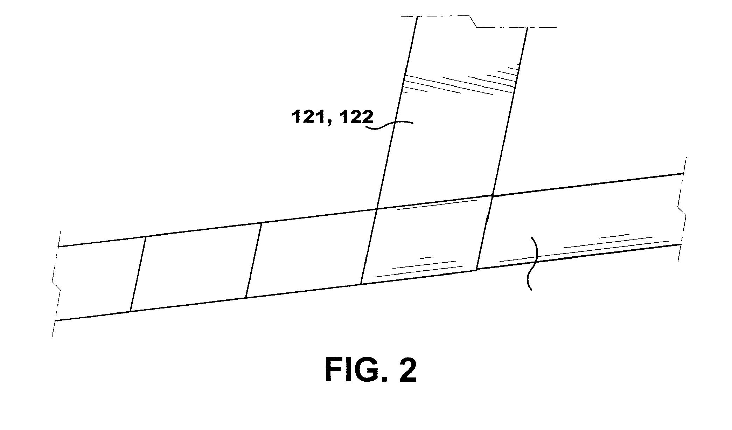

Superconducting cable 110 may include at least two conductors, a first conductor 121 and a second conductor 122. First conductor 121 may be wound around a supporting "former" 120 (FIG. 2), which may be a hollow tube through which liquid nitrogen or another cooling medium may flow. First conductor 121 may be concentric within second conductor 122. Between first conductor 121 and second conductor 122 may be a cryogenic dielectric material 125, such as, but not limited to kapton polyimide film, araldite 5808 epoxy resin, cryoflex, and a nano-filled polymer. Although it is not shown in FIG. 1, first conductor 121 may also be tapered at a first end 130 of superconducting cable 110 and second conductor 122 may be tapered at a second end 135 of superconducting cable 110.

The other layer of conductors 121, 122 in cable system 100 may be surrounded by an additional layer of cryogenic dielectric material, then a space for liquid nitrogen or another cooling material to flow, then by a "cryostat" or thermal insulation pipe, and fmally by an outer protective jacket.

As used herein, conductors 121, 122 and other conductors are "tapered", such that from one end to the other end of the conductor, there may be gradual decreasing amount of superconducting material, such that there is less superconducting material on one end, which may be zero. FIG. 2 shows a partial perspective view of conductor 121, 122 for system 100 according to an embodiment of the invention. As shown, conductor 121, 122 may be a superconducting material 121, 122 that is wrapped around former 120. Superconducting cable 110 is formed by winding in a spiral fashion superconducting material 121 (i.e., tapes) around former 120. In a conventional (non-tapered) superconducting cable, the superconducting material includes tapes of all the same length. In a tapered superconducting cable, such as superconducting cable 110, superconducting material/tapes 121, 122 may be a range of lengths. Superconducting material/tapes 121, 122 start at opposite ends of former 120, such that over the length of former 12, the amount of superconducting material 121, 122 decreases. That is, in the embodiment shown in FIG. 1, first conductor 121 may be tapered at first end 130 of superconducting cable 110, such that first conductor 121 includes more superconducting material at second end 135 and less superconducting material at first end 130. Additionally, second conductor 120 may be tapered at second end 135 of superconducting cable 110, such that second conductor 122 includes less superconducting material at second end 135. In an alternative embodiment (not shown), conductor 121, 122 may be formed by connecting, in series, a plurality conductors with varying numbers of tapes.

Superconducting material may include any now known or later developed high-temperature superconducting material, such as, but not limited to, Bismuth Strontium Calcium Copper Oxide (BSCCO) Bi₂Sr₂Ca₂Cu₃O₁₀. Other materials include Yttrium-Bariam-Coppper-Oxide (YBCO) YBa₂Cu₃O₇, La_{1.85}Ba_{0.85}CuO₄, and HgBa₂Ca_{Cu}3Oₓ. Superconducting material may be provided in several forms, including, but not limited to: deposted on a coated conductor flexible metal tape, drawn into wire using the power in tube (PIT) method, or bulk powder formed into shapes, such as rings, rods, and tubes.

System 100 may also include at least two tuning inductors, a first tuning inductor 140 and a second tuning inductor 142. Tuning inductors 140, 142 are each connected to a conductor 120, 122 and are connected to the end 130, 135 that includes the most superconducting material. In the embodiment shown in FIG. 1, first tuning inductor 140 may be connected to first conductor 120 at second end 135 of superconducting cable 110, such that first tuning inductor 140 is connected to the end of first conductor 120 including the most superconducting material. Second tuning inductor 142 may be connected to second conductor 122 at first end 130 of superconducting cable 110, such that second tuning inductor 142 is connected to the end of second conductor 122 including the most superconducting material.

System 100 may further include at least two adjustable frequency converters, a first adjustable frequency converter 150 and a second adjustable frequency converter 152. First adjustable frequency converter 150 may be connected to first tuning inductor 140 and second adjustable frequency converter 152 may be connected to second tuning inductor 142. Adjustable frequency converters 150, 152 may be connected to an electrical grid 160. In operation, adjustable frequency converters 150, 152 may change the operation frequency of system 100 to one that is best suited for the transmission of power for electrical grid 160. Normally, a lower frequency results in lower A/C losses; however a high frequency results in a smaller overall component system. Tuning inductors 140, 142 resonate at the frequency adjustable frequency converters 150, 152 are operating at. For example, superconducting cable system 100 may operate at at least approximately 60 Hz, such that it is operating in resonant mode, at a higher frequency than power frequency, which is approximately 50 Hz to 60 Hz. In combination, tuning inductors 140, 142 and adjustable frequency converters 150, 152 are able to cancel out the inductance and capacitance of superconducting cable 110, such that there is zero impedance in the transmission of power within electrical grid 160.

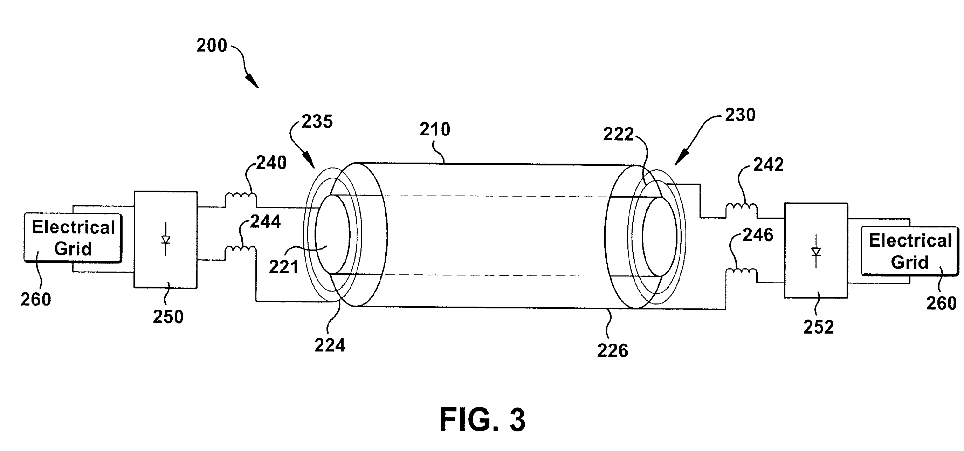

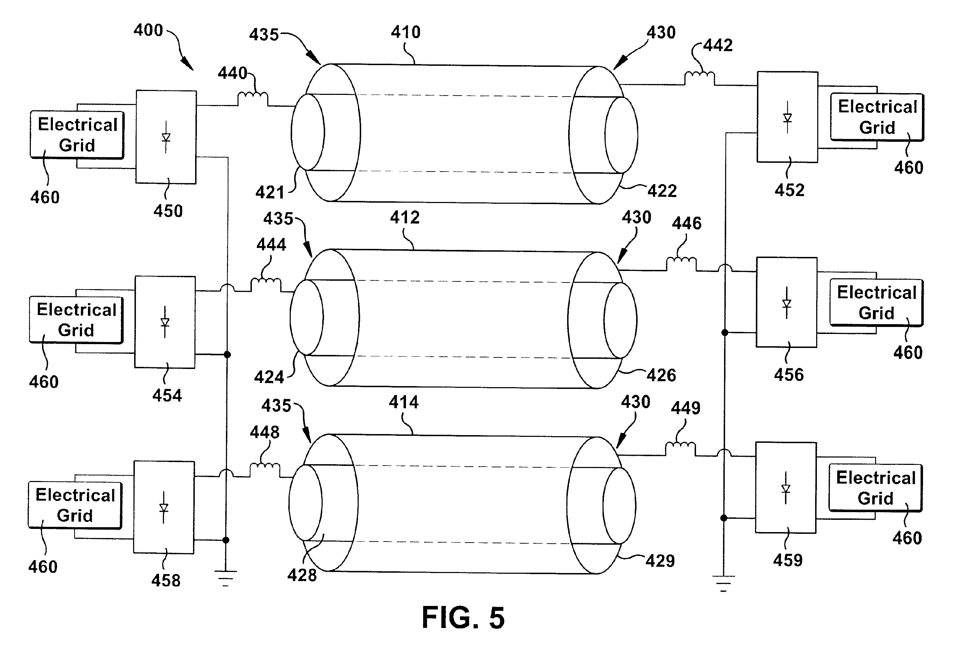

Referring now to FIGS. 3-5, other embodiments of the invention are shown. These embodiments can be used with different systems. For example, the embodiment shown in FIG. 5 may be used in a three-phase system.

Turning now to FIG. 3, a schematic illustration of a superconducting cable system 200 according to an embodiment of the invention is shown. System 200 may include several components of system 100, as discussed above with respect to FIG. 1. However, system 200 includes a four-conductor concentric superconducting cable 210. That is, in addition to first conductor 220 and second conductor 222, discussed above in FIG. 1, superconducting cable 210 may include a third conductor 224 and a fourth conductor 226. Second conductor 222 may be concentric within third conductor 224 and third conductor 224 may be concentric within fourth conductor 226. Third conductor 224, similar to first conductor 220, may be tapered at first end 230 of superconducting cable 210. Fourth conductor 226, similar to second conductor 222, may be tapered at second end 235 of superconducting cable 210.

System 200 may also include a third tuning inductor 244 and a fourth tuning inductor 246, in addition to first tuning inductor 240 and second tuning inductor 242. First tuning inductor 240 and second tuning inductor 242 may be connected to first conductor 220 and second conductor 222, respectively, as described above with respect to FIG. 1. Third tuning inductor 244 may be connected to third conductor 224 at second end 235 of superconducting cable 210, such that third tuning inductor 244 is connected to the end of third conductor 224 including the most superconducting material. Fourth tuning inductor 246 may be connected to fourth conductor 226 at first end 230 of superconducting cable 210, such that fourth tuning inductor 246 is connected to the end of fourth conductor 226 including the most superconducting material.

System 200 may further include at least two adjustable frequency converters, a first adjustable frequency converter 250 and a second adjustable frequency converter 252. First adjustable frequency converter 250 may be connected to first tuning inductor 240 and third tuning inductor 244. Second adjustable frequency converter 252 may be connected to second tuning inductor 242 and fourth tuning inductor 246. Adjustable frequency converters 250,252 may be connected to an electrical grid 260.

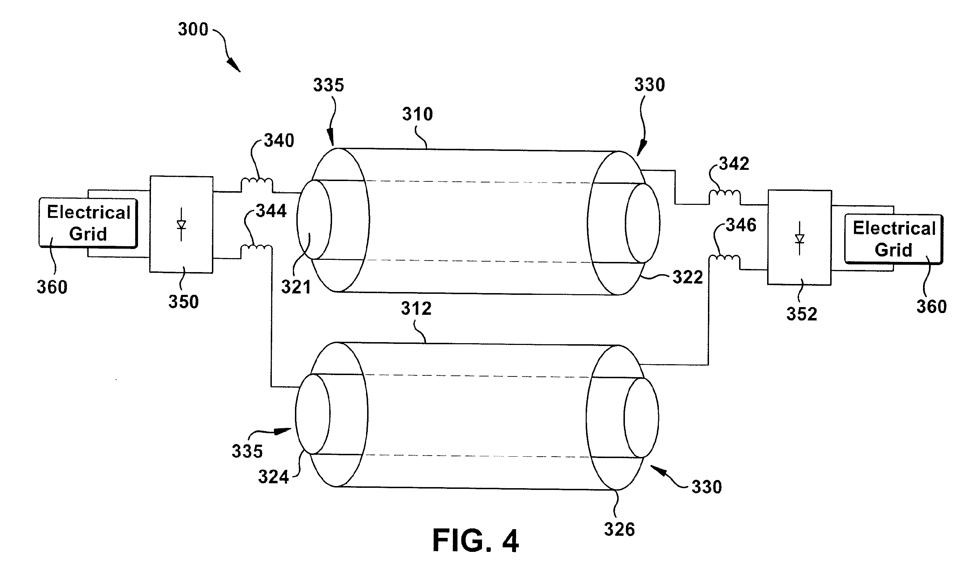

Turning now to FIG. 4, a schematic illustration of a superconducting cable system 300 according to an embodiment of the invention is shown. System 300 may include several components of system 100, as discussed above with respect to FIG. 1. However, system 300 may also include a second superconducting cable 312 connected in parallel to first superconducting cable 310. First superconducting cable 310 may include all the features that superconducting cable 110 includes in FIG. 1, such as first conductor 230 and second conductor 322. Further, second superconducting cable 312 may also include all the features that superconducting cable 110 includes in FIG. 1. That is, second superconducting cable 312 may include a first conductor 324 and a second conductor 326. First conductor 324 of second superconducting cable 312 may be concentric within second conductor 326. As mentioned above with respect to FIG. 1, although it is not shown in FIG. 3, first conductor 320, 324 of both first superconducting cable 310 and second superconducting cable 312 may be tapered at a first end 330 of cables 310, 312 and second conductor 322, 326 may be tapered at a second end 335 of cables 310, 312.

System 300 may also include a third tuning inductor 344 and a fourth tuning inductor 346, in addition to first tuning inductor 340 and second tuning inductor 342. First tuning inductor 340 and second tuning inductor 342 may be connected to first conductor 320 and second conductor 322, respectively, of first superconducting cable 310, as described above with respect to FIG. 1. Third tuning inductor 344 may be connected to first conductor 324 of second superconducting cable 312, such that third tuning inductor 344 is connected to the end of first conductor 324 including the most superconducting material. Fourth tuning inductor 346 may be connected to second conductor 326 of second superconducting cable 312, such that fourth tuning inductor 346 is connected to the end of second conductor 326 including the most superconducting material.

System 300 may further include at least two adjustable frequency converters, a first adjustable frequency converter 350 and a second adjustable frequency converter 352. First adjustable frequency converter 350 may be connected to first tuning inductor 340 and third tuning inductor 344. Second adjustable frequency converter 352 may be connected to second tuning inductor 342 and fourth tuning inductor 346. Adjustable frequency converters 350, 352 may be connected to an electrical grid 360.

Turning now to FIG. 5, a schematic illustration of a superconducting cable system 400 according to an embodiment of the invention is shown. System 400 may include several components of system 100, as discussed above with respect to FIG. 1. That is, first superconducting cable 410 is similar to first superconducting cable 110 in FIG. 1 However, system 400 may include a second superconducting cable 412 and a third superconducting cable 414, both cables 412, 414 connected in parallel with first superconducting cable 410. Second superconducting cable 412 and third superconducting cable may be identical to first superconducting cable 410.

Second superconducting cable 412 may include first conductor 424 concentric within second conductor 426. First conductor 424 may also be tapered at first end 430 of second superconducting cable 412 and second conductor 426 may be tapered at second end 435 of second superconducting cable 412. System 400 may also include third tuning inductor 444 and fourth tuning inductor 446. Third tuning inductor 444 may be connected to first conductor 424 of third superconducting cable 412, such that third tuning inductor 444 is connected to the end of first conductor 424 including the most superconducting material. Fourth tuning inductor 446 may be connected to second conductor 426 of second superconducting cable 412, such that fourth tuning inductor 446 is connected to the end of second conductor 426 including the most superconducting material. Third adjustable frequency converter 454 may be connected to third tuning inductor 444 and fourth adjustable frequency converter 456 may be connected to fourth tuning inductor 446.

Similarly to first cable 410 and second cable 412, third superconducting cable 414 may include first conductor 428 concentric within second conductor 429. First conductor 428 may also be tapered at first end 430 of third superconducting cable 414 and second conductor 429 may be tapered at second end 435 of third superconducting cable 414. System 400 may also include fifth tuning inductor 448 and sixth tuning inductor 449. Fifth tuning inductor 448 may be connected to first conductor 428 of third superconducting cable 414, such that fifth tuning inductor 448 is connected to the end of first conductor 428 including the most superconducting material. Sixth tuning inductor 449 may be connected to second conductor 429 of third superconducting cable 414, such that sixth tuning inductor 449 is connected to the end of second conductor 429 including the most superconducting material. Fifth adjustable frequency converter 458 may be connected to fifth tuning inductor 448 and sixth adjustable frequency converter 459 may be connected to sixth tuning inductor 449.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the various embodiments of the present invention, including the best mode, and also to enable any person skilled in the art to practice the invention, including making and using any devices or systems and performing any incorporated methods. The patentable scope of the various embodiments of the present invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An apparatus comprising:
   a cable, the cable comprising at least two conductors, each conductor comprising a high-temperature superconductor material, wherein a first conductor is concentric within a second conductor, and wherein the first conductor is tapered at a first end of the cable and the second conductor is tapered at a second end of the cable.
2. The apparatus of clause 1, further comprising a third conductor and a fourth conductor, the second conductor concentric within the third conductor, and the third conductor concentric within the fourth conductor.
3. The apparatus of clause 1 or clause 2, wherein the third conductor is tapered at the first end of the cable and the fourth conductor tapered at the second end of the cable.
4. The apparatus of any preceding clause, further comprising a second cable connected in parallel to the first cable, wherein the second cable comprises at least two conductors, each conductor comprising a high-temperature superconductor material, wherein a first conductor is concentric within a second conductor, and wherein the first conductor is tapered at a first end of the second cable and the second conductor is tapered at a second end of the second cable.
5. The apparatus of any preceding clause, further comprising a third cable connected in parallel to the first and second cables, wherein the third cable comprises at least two conductors, each conductor comprising a high-temperature superconductor material, wherein a first conductor is concentric within a second conductor, and wherein the first conductor is tapered at a first end of the third cable and the second conductor is tapered at a second end of the third cable.
6. The apparatus of any preceding clause, wherein an operating frequency for the cable is at least approximately 60 Hz.
7. The apparatus of any preceding clause, further comprising a cryogenic material between the first and second conductors.
8. A system comprising:
   a cable, the cable comprising at least two conductors, each conductor comprising a high-temperature superconductor material, wherein a first conductor is concentric within a second conductor, and wherein the first conductor is tapered at a first end of the cable and the second conductor is tapered at a second end of the cable;
   at least two tuning inductors, wherein a first tuning inductor is connected to the first conductor at a second end of the cable and a second tuning inductor is connected to the second conductor at a first end of the cable; and
   at least two adjustable frequency converters, a first adjustable frequency converter connected to the first tuning inductor and the second adjustable frequency converter connected to the second tuning inductor.
9. The system of any preceding clause, further comprising a third conductor and a fourth conductor, the second conductor concentric within the third conductor, and the third conductor concentric within the fourth conductor.
10. The system of any preceding clause, wherein the third conductor is tapered at the first end of the cable and the fourth conductor tapered at the second end of the cable.
11. The system of any preceding clause, further comprising a third tuning inductor and a fourth tuning inductor, wherein the third tuning inductor is connected the third conductor at the second end of the cable, and the fourth tuning inductor is connected to the fourth conductor at the first end of the cable.
12. The system of any preceding clause, further comprising a second cable connected in parallel to the first cable, wherein the second cable comprises at least two conductors, each conductor comprising a high-temperature superconductor material, wherein a first conductor is concentric within a second conductor, and wherein the first conductor is tapered at a first end of the second cable and the second conductor is tapered at a second end of the second cable.
13. The system of any preceding clause, further comprising a third tuning inductor and a fourth tuning inductor, wherein the third tuning inductor is connected to a first conductor of the second cable at a second end of the second cable, and the fourth tuning inductor is connected to a second conductor of the second cable at a first end of the second cable.
14. The system of any preceding clause, wherein the third tuning inductor is connected to the first adjustable frequency converter and the fourth tuning inductor is connected to the second adjustable frequency converter.
15. The system of any preceding clause, further comprising a third cable connected in parallel to the first and second cables, wherein the third cable comprises at least two conductors, each conductor comprising a high-temperature superconductor material, wherein a first conductor is concentric within a second conductor, and wherein the first conductor is tapered at a first end of the third cable and the second conductor is tapered at a second end of the third cable.
16. The system of any preceding clause, further comprising a fifth tuning inductor and a sixth tuning inductor, wherein the fifth tuning inductor is connected to a first conductor of the third cable at a second end of the second cable, and the fourth tuning inductor is connected to a second conductor of the second cable at a first end of the second cable.
17. The system of any preceding clause, wherein an operating frequency for the cable is approximately 60 Hz.
18. The system of any preceding clause, further comprising a cryogenic material between the first and second conductors.
19. The system of any preceding clause, wherein the at least two adjustable frequency converters are connected to an electric grid.
20. An apparatus comprising:
   a cable, the cable comprising at least two conductors, each conductor comprising a high-temperature superconductor material, wherein a first conductor is concentric within a second conductor, the second conductor is concentric within a third conductor, and the third conductor is concentric within a fourth conductor, and wherein the first conductor and the third conductor are tapered at a first end of the cable and the second conductor and the fourth conductor are tapered at a second end of the cable.

## Claims

1. An apparatus comprising:
a cable (110, 210, 310, 410), the cable comprising at least two conductors, each conductor comprising a high-temperature superconductor material, wherein a first conductor (121) is concentric within a second conductor (122), and wherein the first conductor is tapered at a first end (130) of the cable and the second conductor is tapered at a second end (135) of the cable.

2. The apparatus of claim 1, further comprising a third conductor (224) and a fourth conductor (226), the second conductor concentric within the third conductor, and the third conductor concentric within the fourth conductor.

3. The apparatus of claim 1 or claim 2, wherein the third conductor (224) is tapered at the first end (130) of the cable and the fourth conductor (226) tapered at the second (135) end of the cable.

4. The apparatus of any preceding claim, further comprising a second cable (312, 412) connected in parallel to the first cable (110, 210, 310, 410), wherein the second cable comprises at least two conductors, each conductor comprising a high-temperature superconductor material, wherein a first conductor (324) is concentric within a second conductor (326), and wherein the first conductor is tapered at a first end (330) of the second cable and the second conductor is tapered at a second end (335) of the second cable.

5. The apparatus of any preceding claim, further comprising a third cable (414) connected in parallel to the first (410) and second cables (412), wherein the third cable comprises at least two conductors, each conductor comprising a high-temperature superconductor material, wherein a first conductor (428) is concentric within a second conductor (429), and wherein the first conductor is tapered at a first end (430) of the third cable and the second conductor is tapered at a second end (435) of the third cable.

6. The apparatus of any preceding claim, wherein an operating frequency for the cable (110, 210, 310, 410) is at least approximately 60 Hz.

7. The apparatus of any preceding claim, further comprising a cryogenic material (125) between the first and second conductors.

8. A system (100, 200, 300, 400) comprising:
a cable (110, 210, 310, 410), the cable comprising at least two conductors, each conductor comprising a high-temperature superconductor material, wherein a first conductor (121) is concentric within a second conductor (122), and wherein the first conductor is tapered at a first end (130) of the cable and the second conductor is tapered at a second end (135) of the cable;
at least two tuning inductors, wherein a first tuning inductor (140) is connected to the first conductor at a second end (135) of the cable and a second tuning inductor (142) is connected to the second conductor at a first end (130) of the cable; and
at least two adjustable frequency converters, a first adjustable frequency converter (150) connected to the first tuning inductor and the second adjustable frequency converter (152) connected to the second tuning inductor.

9. The system of claim 8, further comprising a second cable (312) connected in parallel to the first cable (310), wherein the second cable comprises at least two conductors, each conductor comprising a high-temperature superconductor material, wherein a first conductor (324) is concentric within a second conductor (326), and wherein the first conductor is tapered at a first end (330) of the second cable and the second conductor is tapered at a second end (335) of the second cable.

10. An apparatus comprising:
a cable (210), the cable comprising at least two conductors, each conductor comprising a high-temperature superconductor material, wherein a first conductor (221) is concentric within a second conductor (222), the second conductor is concentric within a third conductor (224), and the third conductor is concentric within a fourth conductor (226), and wherein the first conductor and the third conductor are tapered at a first end (230) of the cable and the second conductor and the fourth conductor are tapered at a second end (235) of the cable.
